# EUROPÄISCHE PATENTSCHRIFT

(11) **EP 2 171 302 B1**
(45) Veröffentlichungstag und Bekanntmachung des Hinweises auf die Patenterteilung: **15.06.2011**
(21) Anmeldenummer: 08761138.0
(22) Anmeldetag: 18.06.2008
(51) Int. Cl.: F16D 41/18

(54) **FREILAUFKUPPLUNG**
FREEWHEEL COUPLING
ACCOUPLEMENT DE ROUE LIBRE

(30) Priorität: 27.06.2007 DE 102007029812
(43) Veröffentlichungstag der Anmeldung: 07.04.2010
(73) Patentinhaber: Schaeffler Technologies GmbH & Co. KG, 91074 Herzogenaurach (DE)
(72) Erfinder: SMETANA, Tomas, 91056 Erlangen (DE)
(86) Internationale Anmeldenummer: PCT/EP2008/057665
(87) Internationale Veröffentlichungsnummer: WO 2009/000716

(56) Entgegenhaltungen:
- EP-A- 0 811 788
- FR-A- 1 238 625
- US-A1- 2001 027 649

## Beschreibung

### Gebiet der Erfindung

Die Erfindung betrifft eine auch als Klinkensperre bezeichnete formschlüssige Freilaufkupplung.

### Hintergrund der Erfindung

Ein mit Formschluss arbeitender Freilauf-Kupplungsmechanismus ist beispielsweise aus der EP 0 811 788 B1 bekannt. Dieser Freilaufmechanismus ist für Drehmomentwandler vorgesehen und soll sich dadurch auszeichnen, dass Stoßgeräusche unterdrückt werden. In der EP 0 811 788 B1 sind zwei verschiedene Bauformen offenbart, wobei in der ersten Bauform des Freilaufs ein erster Laufkranz relativ zu einem zweiten Laufkranz axial verschieblich ist, während in der zweiten Bauform die beiden Laufkränze axial unveränderlich voneinander beabstandet sind. In beiden Bauformen ist zwischen den Laufkränzen ein Zwischenelement angeordnet, das mit Zähnen an den Laufkränzen zusammenwirkt.

US2001/0027649 A1 zeigt ebenso eine Freilaufkupplung gemäß dem Oberbegriff des Anspruchs 1.

### Aufgabe der Erfindung

Der Erfindung liegt die Aufgabe zugrunde, einen formschlüssigen Freilauf gegenüber dem Stand der Technik derart weiter zu entwickeln, dass - basierend auf einem einzigen Konstruktionsprinzip - eine besonders einfache Anpassung der mechanischen Eigenschaften an die Betriebsbedingungen möglich ist.

### Zusammenfassung der Erfindung

Diese Aufgabe wird erfindungsgemäß gelöst durch eine formschlüssige Freilaufkupplung mit den Merkmalen des Patentanspruchs 1. Diese Freilaufkupplung umfasst zwei jeweils eine Anzahl Raststrukturen aufweisender Klemmbahnen, wobei im zwischen den Klemmbahnen gebildeten Spaltraum ein Klemmring sowie ein Schleppring angeordnet sind. Die Raststrukturen umfassen beispielsweise Klemmrampen oder Aussparungen. Der Klemmring ist in Zusammenwirkung mit dem Schleppring und den Raststrukturen dazu vorgesehen, eine Rotation der ersten Klemmbahn relativ zur zweiten Klemmbahn in einer ersten Drehrichtung zu verhindern, wogegen eine Rotation in der Gegenrichtung freigegeben wird. Im ersten Fall, das heißt bei blockiertem Freilauf, greift eine erste Gruppe von mit dem Klemmring verbundenen, insbesondere einstückig mit diesem ausgebildeten Klemmzungen in Raststrukturen an der ersten Klemmbahn ein, während eine zweite Gruppe von Klemmzungen des Klemmrings in Raststrukturen der zweiten Klemmbahn eingreift. Durch die Herstellung des Formschlusses zwischen den Klemmbahnen über die Klemmzungen ist zum einen ein zuverlässiges Blockieren der Freilaufkupplung in Sperrrichtung gegeben, zum anderen bietet die Leitung des Kraft- und Drehmomentflusses durch die Klemmzungen die Möglichkeit, zusätzlich zur reinen Blockierwirkung weitere vorteilhafte mechanische Eigenschaften zu implementieren. Insbesondere sind die Klemmzungen derart elastisch gestaltbar, dass im Moment des Blockierens auftretende Kraft- und Drehmomentspitzen gedämpft werden.

Beim Übergang von der gesperrten Position des Freilaufs in den Freilaufbetrieb sorgt der Schleppring, welcher relativ zum Klemmring begrenzt schwenkbar und gegen eine der Klemmbahnen angefedert ist, dafür, dass sich der Klemmring im Spaltraum verlagert, wobei er vollständig von einer der Klemmbahnen abhebt, während die dieser Klemmbahn abgewandten Klemmzungen in die Raststrukturen der gegenüberliegenden Klemmbahn eintauchen. Damit ist ein Freilaufbetrieb ohne ratternde oder klickende Geräusche gegeben. Der Schleppring entfaltet im Gegensatz zum Klemmring in keinem Betriebszustand eine Blockierwirkung. Ein im Freilaufbetrieb zwischen dem Schleppring und einer der Klemmbahnen auftretendes Reibmoment ist unabhängig von der Form des Klemmrings durch die Gestaltung und/oder Anfederung des Schlepprings einstellbar. Der Schleppring kann derart gestaltet sein, dass er zugleich der Gleitlagerung zwischen den Klemmbahnen dient. Im Unterschied zum Klemmring wird der Schleppring beim Übergang vom Freilaufbetrieb in den blockierten Zustand der Freilaufkupplung nicht orthogonal zwischen den Klemmbahnen verlagert.

In einer ersten, als axiale Klinkensperre bezeichneten Bauform sind der Klemmring sowie der Schleppring axial zwischen den Klemmbahnen angeordnet. In bevorzugter Ausgestaltung ist hierbei zusätzlich zum Klemmring und zum Schleppring ein Federring im Spaltraum angeordnet. Dieser Federring belastet zumindest den Schleppring mit einer Axialkraft in Richtung zu einer der Klemmbahnen. Vorzugsweise wird durch den Federring auch der Klemmring mit einer Kraft in derselben Richtung beaufschlagt. In insgesamt schmaler, rationell herstellbarer Bauform weist der Federring zwei ringförmige Randleisten auf, welche durch in radialer Richtung verlaufende Stege miteinander verbunden sind, wobei aus jedem Steg zu beiden Seiten jeweils eine Federzunge auskragt. Dabei ist eine der Federzungen zur Anfederung des Klemmrings vorgesehen, während die andere Federzunge den Schleppring anfedert. Die Federwirkung kommt zumindest zum Teil, vorzugsweise zum größten Teil, durch die Torsion des Steges zwischen den Randleisten zustande. Damit ist in vorteilhafter Weise eine wechselseitige Beeinflussung zwischen den auf den Klemmring und auf den Schleppring wirkenden Federkräften gegeben. Eine im Vergleich zu den auf den Klemmring wirkenden Federkräften starke Anfederung des Schlepprings an eine der Klemmbahnen ist auf einfache Weise dadurch realisierbar, dass die den Schleppring kontaktierende Federzunge kürzer als die den Klemmring kontaktierende Federzunge ist. Die drei Teile Federring, Klemmring und Schleppring können lose, das heißt ohne feste Verbindung zueinander oder zu einer der Klemmbahnen, in den Spaltraum eingelegt sein. Zur Vereinfachung der Montage ist auch eine Fixierung des Federrings am Innenring möglich. In beiden Fällen ist der axiale Abstand zwischen den Klemmbahnen im Betrieb der Freilaufkupplung unveränderlich.

In einer zweiten, als radiale Klinkensperre bezeichneten Bauform der Freilaufkupplung sind der Klemmring und der Schleppring radial zwischen den Klemmbahnen angeordnet. Im Gegensatz zur ersten Bauform ist in dieser Bauform vorzugsweise keine gesonderte Feder vorgesehen. Stattdessen kann der Klemmring als Federelement fungieren. Der Klemmring ist dabei im Wesentlichen als gebogenes Band, zwischen dessen Enden ein Schlitz frei bleibt, ausgebildet. Der unter mechanischer Spannung stehende Klemmring federt den Schleppring an eine der Klemmbahnen, vorzugsweise an den Innenring, an. Zusätzliche oder alternativ kann der Schleppring derart ausgebildet sein, dass er als Federelement wirkt. Ähnlich wie der Klemmring ist auch der Schleppring vorzugsweise geschlitzt.

Sowohl bei der axialen als auch bei der radialen Klinkensperre ist der Klemmring vorzugsweise derart geformt, dass jede der ersten Klemmbahn zugewandte Klemmzunge zusammen mit einer der zweiten Klemmbahn zugewandten Klemmzunge eine Doppelklemmzunge bildet, welche beispielsweise mittels eines Steges zwischen zwei Randleisten des Klemmrings gehalten ist, wobei die Doppelklemmzungen sowie die Stege einstückig mit den Randleisten ausgebildet sind. Die Stege verlaufen im Fall der axialen Klinkensperre in radialer Richtung und im Fall der radialen Klinkensperre in axialer Richtung der Freilaufkupplung. In beiden Fällen, insbesondere bei der radialen Klinkensperre, ist zumindest in geringem Umfang eine federnde Torsion der Doppelklemmzunge um den Steg möglich.

Eine höhere Torsionssteifigkeit der Klemmzungen ist gemäß einer alternativen, besonders für die Übertragung höherer Drehmomente geeigneten Bauform erreichbar, wenn die Klemmzungen als mit den Randleisten verbundene Klemmtaschen ausgebildet sind. Hierbei ist eine Klemmtasche auf mindestens der Hälfte ihrer in Umfangsrichtung gemessenen Länge, vorzugsweise längs ihrer gesamten Erstreckung in dieser Richtung, einstückig mit den Randleisten verbunden. Eine Torsion innerhalb des Klemmrings kann in diesem Fall in Umfangsabschnitten außerhalb der Klemmtaschen auftreten. Die Anzahl der der ersten Klemmbahn zugewandten Klemmtaschen stimmt nicht notwendigerweise mit der Anzahl der der zweiten Klemmbahn zugewandten Klemmtaschen überein.

In einem orthogonal zu den Klemmbahnen gelegten Schnitt weisen die Klemmzungen vorzugsweise jeweils einen inneren Abschnitt und einen äußeren Abschnitt auf, wobei der äußere Abschnitt relativ zur Randleiste des Klemmrings geringer schräg gestellt ist als der innere Abschnitt. Das Ende des äußeren Abschnitts der Klemmzunge ist dabei zur Anlage an einer eine Klemmstruktur, beispielsweise eine Klemmrape oder eine als Durchgangsöffnung ausgebildete Aussparung, begrenzende Anschlagfläche vorgesehen. Die Flächennormale der Anschlagfläche schließt mit der Rotationsachse der Freilaufkupplung vorzugsweise einen rechten Winkel ein.

Der Klemmring sowie der Schleppring sind besonders rationell als spanlos umgeformte Blechteile herstellbar. Während der Klemmring vorzugsweise aus Stahl gefertigt ist, eignet sich zur Herstellung des Schlepprings außer Stahl beispielsweise auch Messing oder Bronze. Unabhängig vom Werkstoff weist der Schleppring in bevorzugter Ausgestaltung Randleisten sowie relativ zu diesen schräg gestellt Steuerflächen auf, die zur Zusammenwirkung mit dem Klemmring, das heißt zur Verlagerung des Klemmrings innerhalb des Spaltraums, vorgesehen sind. Für die Fertigung des Schlepprings eignen sich auch Kunststoffe, insbesondere faserverstärkte Kunststoffe. Die Klemmbahnen sind durch Teile gebildet, welche beispielsweise durch Räume, Tiefziehen, Sintern oder aus Blech hergestellt sind. Diese Teile werden ohne Beschränkung der Allgemeinheit als Innenring und Außenring, die entsprechenden Klemmbahnen als Innenklemmbahn bzw. Außenklemmbahn, bezeichnet.

Nachfolgend werden vier Ausführungsbeispiele der Erfindung anhand einer Zeichnung näher erläutert. Hierin zeigen:

### Kurze Beschreibung der Zeichnung

- Figur 1: ein erstes Ausführungsbeispiel einer formschlüssi- gen Freilaufkupplung in Explosionsdarstellung,
- Figur 2: ausschnittsweise die Freilaufkupplung nach Figur 1 in einer Schnittdarstellung,
- Figur 3: einen Klemmring der Freilaufkupplung nach Figur 1,
- Figur 4: einen Schleppring der Freilaufkupplung nach Fi- gur 1,
- Figur 5: einen Federring der Freilaufkupplung nach Figur 1,
- Figur 6 bis 8: die Freilaufkupplung nach Figur 1 in verschiedenen Betriebszuständen, jeweils in einer Ansicht analog Figur 2,
- Figur 9: ein zweites Ausführungsbeispiel einer formschlüssi- gen Freilaufkupplung in einer Schnittdarstellung,
- Figur 10: einen Klemmring der Freilaufkupplung nach Figur 9,
- Figur 11: einen Schleppring der Freilaufkupplung nach Fi- gur 9,
- Figur 12 bis 14: die Freilaufkupplung nach Figur 9 in verschiedenen Betriebszuständen,
- Figur 15: eine gegenüber der Ausführungsform nach Figur 9 abgewandelte Ausführungsform einer Freilaufkupp- lung,
- Figur 16: einen Klemmring der Freilaufkupplung nach Fi- gur 15,
- Figur 17: einen Schleppring der Freilaufkupplung nach Fi- gur 15,
- Figur 18: eine gegenüber der Ausführungsform nach Figur 1 abgewandelte Ausführungsform einer Freilaufkupp- lung in Explosionsdarstellung,
- Figur 19: einen Innenring der Freilaufkupplung nach Figur 18,
- Figur 20: einen Federring sowie den Innenring der Freilauf- kupplung nach Figur 18,
- Figur 21: einen Klemmring sowie den Innenring der Freilauf- kupplung nach Figur 18,
- Figur 22: einen Schleppring sowie den Innenring der Freilauf- kupplung nach Figur 18, und
- Figur 23: einen Außenring sowie den Innenring der Freilauf- kupplung nach Figur 18.

### Ausführliche Beschreibung der Zeichnung

Einander entsprechende oder gleich wirkende Teile sind in allen Figuren mit den gleichen Bezugszeichen gekennzeichnet. Jede der im Folgenden erläuterten Ausführungsformen ist insbesondere für die Verwendung in einem Drehmomentwandler geeignet.

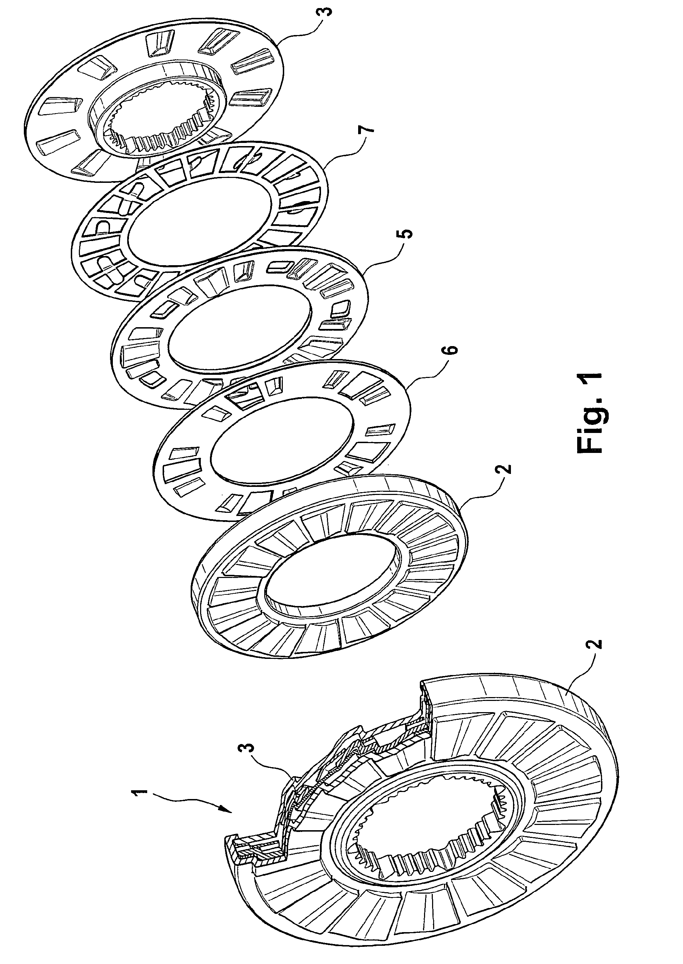

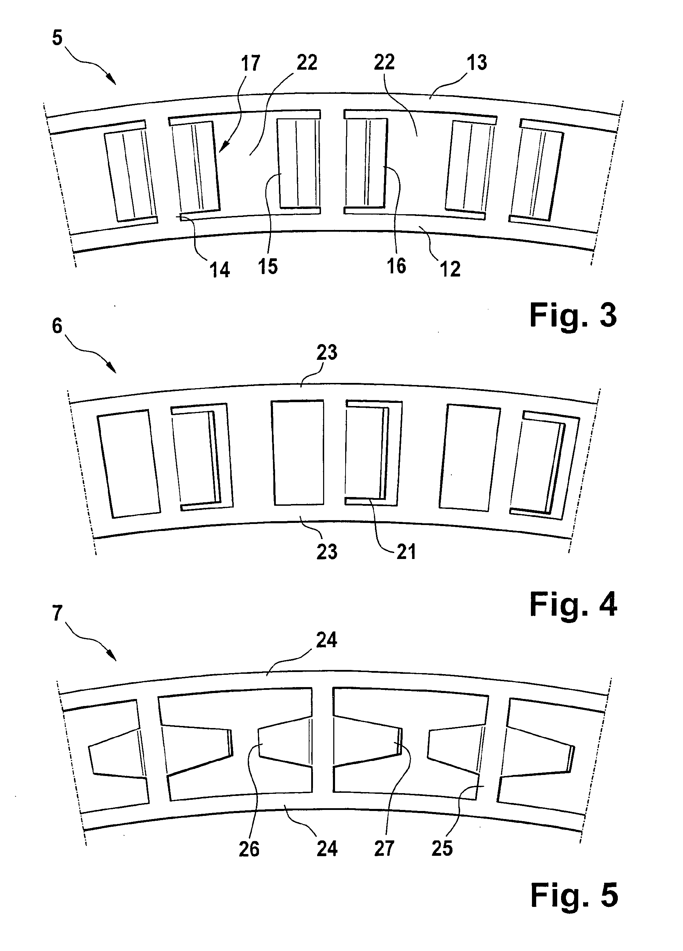

Eine in den Figuren 1 bis 8 dargestellte Freilaufkupplung 1 ist als axiale Klinkensperre ausgebildet und weist einen Außenring 2 sowie einen Innenring 3 auf, wobei in nicht dargestellter Weise der Außenring 2 mit einer Welle und der Innenring 3 mit einem Leitrad verbunden ist. Zwischen dem Außenring 2 und dem Innenring 3 ist ein ringförmiger Spaltraum 4 gebildet, in welchem ein Klemmring 5, eine Schleppring 6 und ein Federring 7 angeordnet sind. Der Außenring 2 sowie der Innenring 3 bilden Klemmbahnen 8, 9, welche jeweils Raststrukturen 10,11, im vorliegenden Fall in Form von Klemmrampen, aufweisen. Die Anzahl der Klemmrampen 10 am Außenring 2 ist höher als die Anzahl der Klemmrampen 11 am Innenring 3. Der mit H bezeichnete Abstand zwischen den Klemmbahnen 8, 9 ist in jedem Betriebszustand der Freilaufkupplung 1 konstant. Die Lage der Rotationsachse A der Freilaufkupplung 1 ist durch eine strichpunktierte Linie angedeutet.

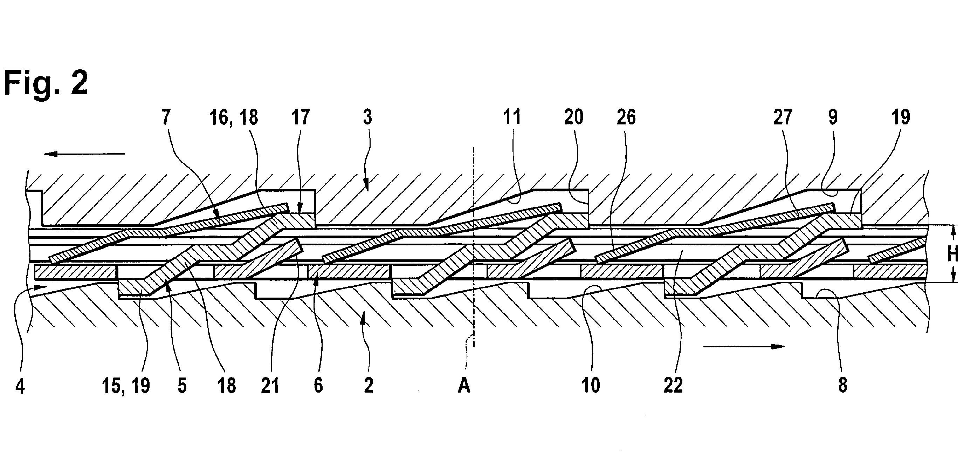

Der Klemmring 5 weist zwei umlaufende Randleisten 12, 13 auf, wobei die innere Randleiste 12 mit der äußeren Randleiste 13 durch in radialer Richtung verlaufende Stege 14 verbunden ist. An jedem Steg 14 sind beidseitig Klemmzungen 15, 16 angeformt, womit so genannte Doppelklemmzungen 17 gebildet sind. Jede Klemmzunge 15, 16 weist einen inneren, an den Steg 14 anschließenden Abschnitt 18 sowie einen relativ zum inneren Abschnitt abgeknickten äußeren Abschnitt 19 auf, wobei letztgenannter Abschnitt 19 im Wesentlichen in einer zur Rotationsachse A normalen Ebene liegt, während der innere Abschnitt 18 gegenüber den Randleisten 12, 13 stärker schräg gestellt ist. Befindet sich die Freilaufkupplung 1, wie in Figur 2 dargestellt, in blockierender Position, so liegen die Enden der äußeren Abschnitte 19 an Anschlagflächen 20 an, welche die Klemmrampen 10, 11 begrenzen. Die inneren Abschnitte 18 haben dagegen keinen Kontakt zu den Klemmrampen 10, 11 und stellen in Zusammenwirkung mit den Stegen 14 eine zumindest geringfügige elastische Nachgiebigkeit jeder Doppelklemmzunge 17 sicher.

Der Schleppring 6, auch als Schleppkäfig bezeichnet, ist im Wesentlichen axial zwischen dem Klemmring 5 und dem Außenring 2 angeordnet, wobei einzelne Steuerflächen 21 des Schlepprings 6 in Axialrichtung über die Randleisten 12, 13 des Klemmrings 5 hinausragen. Die Steuerflächen 21 greifen jeweils in ein Fenster 22 im Klemmring 5 ein und sind zur Zusammenwirkung mit den Doppelklemmzungen 17 vorgesehen. Die einzelnen Steuerflächen 21 sind zwischen Randleisten 23 des Schlepprings 6 angeordnet und ähnlich wie die Klemmzungen 15, 16 mit Hilfe von Stanz- und Biegeprozessen geformt.

Der Federring 7 ist auf der dem Innenring 3 zugewandten Seite des Klemmrings 5 angeordnet und dient der Anfederung sowohl des Schlepprings 6 als auch des Klemmrings 5 an den Außenring 2. Prinzipiell vergleichbar mit dem Klemmring 5 sowie mit dem Schleppring 6 weist auch der Federring 7 umlaufende Randleisten 24 auf, welche durch in radialer Richtung verlaufende Stege 25 miteinander verbunden sind. Im Fall des Federrings 7 sind an jeden Steg 25 zwei Federzungen 26, 27 angeformt, wobei die kürzere Federzuge 26 zur Anfederung des Schlepprings 6 und die längere Federzuge 27 zur Anfederung des Klemmrings 5 vorgesehen ist. Die Federwirkung beider Federzungen 26, 27 wird hauptsächlich durch Torsion des Steges 25 hergestellt.

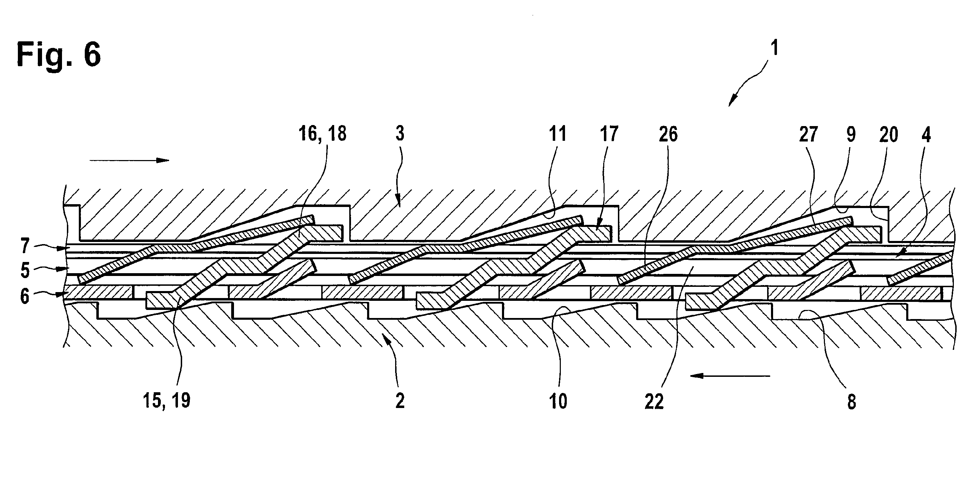

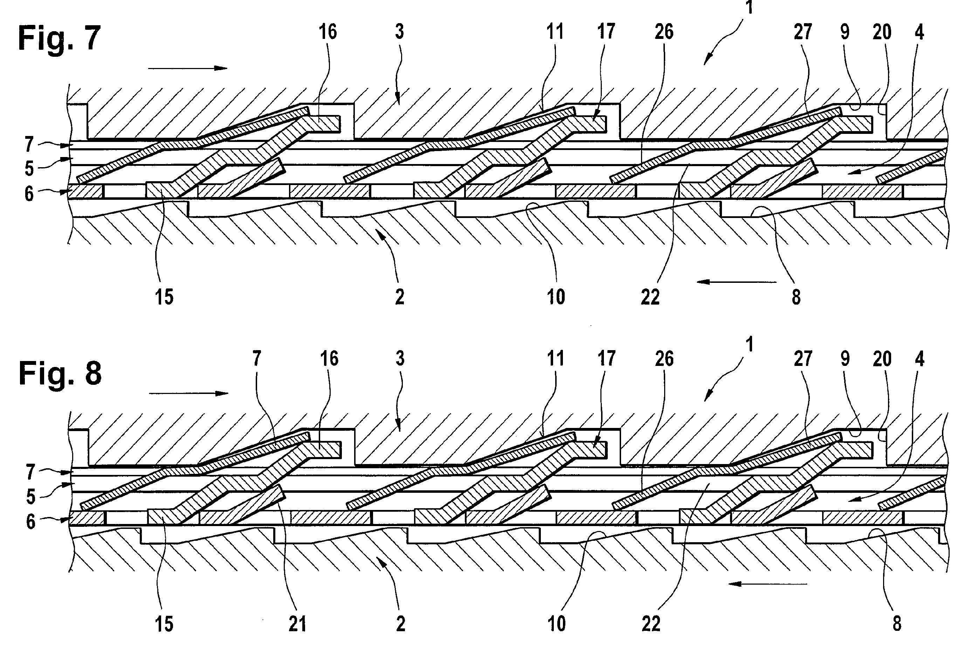

Der Übergang zwischen der blockierten Stellung des Freilaufs 1 und dem Freilaufbetrieb ist durch die Figuren 6 bis 8 veranschaulicht. Sobald der Außenring 2, wie durch Pfeile angedeutet, beginnt, relativ zum Innenring 3 zu rotieren (Figur 6), schiebt sich der Schleppring 6, welcher zunächst mit dem Außenring 2 mitdreht, derart unter den Klemmring 5, dass die Steuerflächen 21 die Doppelklemmzungen 17 und damit den gesamten Klemmring 5 in Richtung zum Innenring 3 verschieben. Die der Klemmbahn 9 am Innenring 3 zugewandten Klemmzungen 16 tauchen dabei in die entsprechenden Klemmrampen 11 ein, bis der Klemmring 5 vollkommen vom Außenring 2 abgehoben ist (Figur 8). Im Freilaufbetrieb ist, während der Klemmring 5, der Schleppring 6, sowie der Federring 7 gegenüber dem Innenring 3 feststehen, nur noch ein Schleppmoment zwischen dem Schleppring 6 und dem Außenring 2 zu überwinden. Dieses Schleppmoment ist ausreichend, um eine Schwenkbewegung des Schlepprings 6 in eine Axialbewegung des Klemmrings 5 umzusetzen. Dies gilt sowohl beim Übergang in den Freilaufbetrieb, als auch beim umgekehrten Vorgang, das heißt beim erneuten Blockieren der Freilaufkupplung 1.

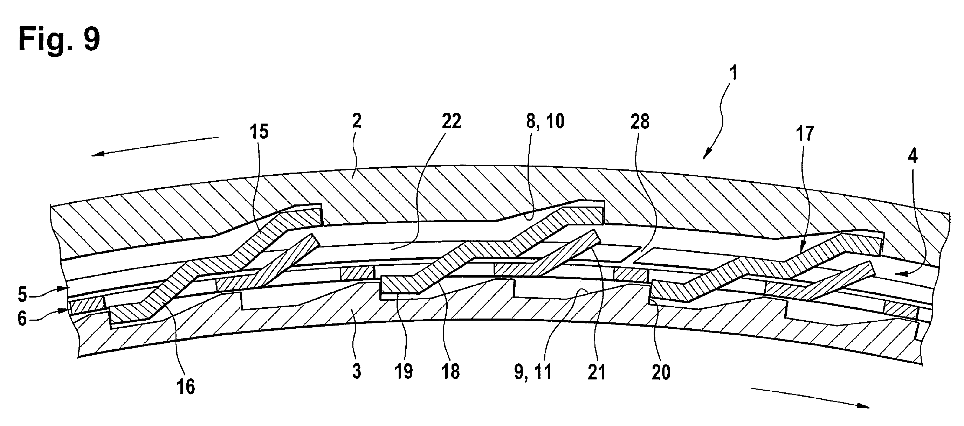

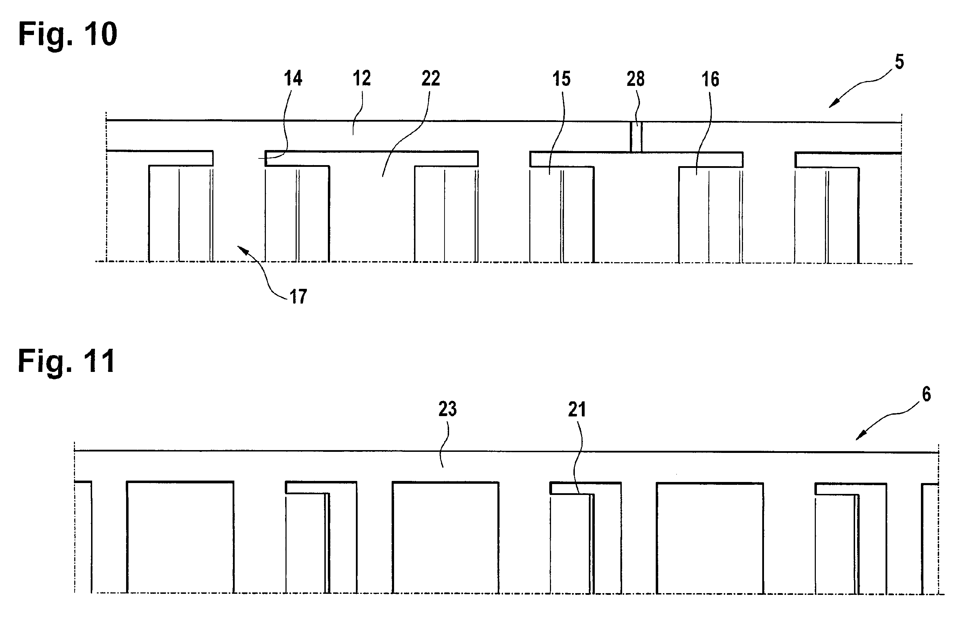

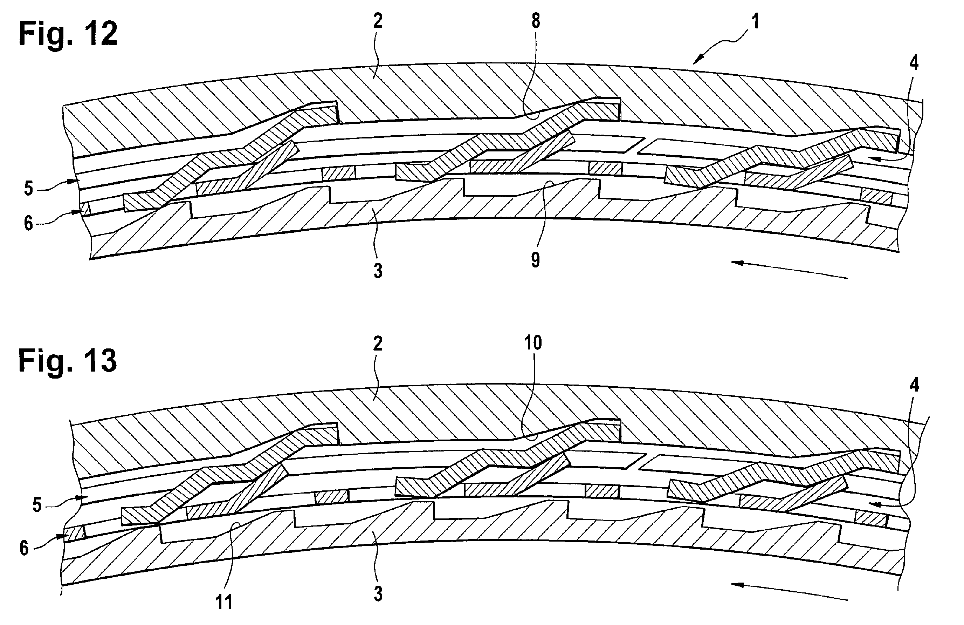

Bei der Ausführungsform nach den Figuren 9 bis 14 handelt es sich im Gegensatz zur Ausführungsform nach den Figuren 1 bis 8 um eine radiale Klinkensperre. In diesem Fall ist der Spaltraum 4 radial zwischen dem Außenring 2 und dem Innenring 3 gebildet. Der Klemmring 5 ist mit sehr guter Materialausnutzung aus einem gestanzten Blechband herstellbar, wobei zwischen den Enden des zu einem Ring gebogenen Bandes ein Schlitz 28 verbleibt. Der gesamte Klemmring 5 ist als Federelement ausgebildet, wobei er an den Innenring 3 angedrückt ist. Ein gesondertes Federelement ist somit nicht erforderlich. Radial zwischen dem Klemmring 5 und dem Innenring 3 befindet sich der Schleppring 6, welcher auch in diesem Fall Steuerflächen 21 aufweist. In nicht dargestellter Weise kann auch der Schleppring 6 geschlitzt sein. Schiebt sich der Schleppring 5 beim Aufheben der Blockierung der Freilaufkupplung 1 unter den Klemmring 5 (Figur 12 - 14), so wird dieser etwas aufgeweitet. Gleichzeitig erfolgt eine geringfügige Torsion jeder Doppelklemmzunge 17 um den zugehörigen Steg 14. Im Übrigen entspricht die prinzipielle Funktionsweise der radialen Klinkensperre nach den Figuren 9 bis 14 der Funktion der axialen Klinkensperre nach den Figuren 1 bis 8.

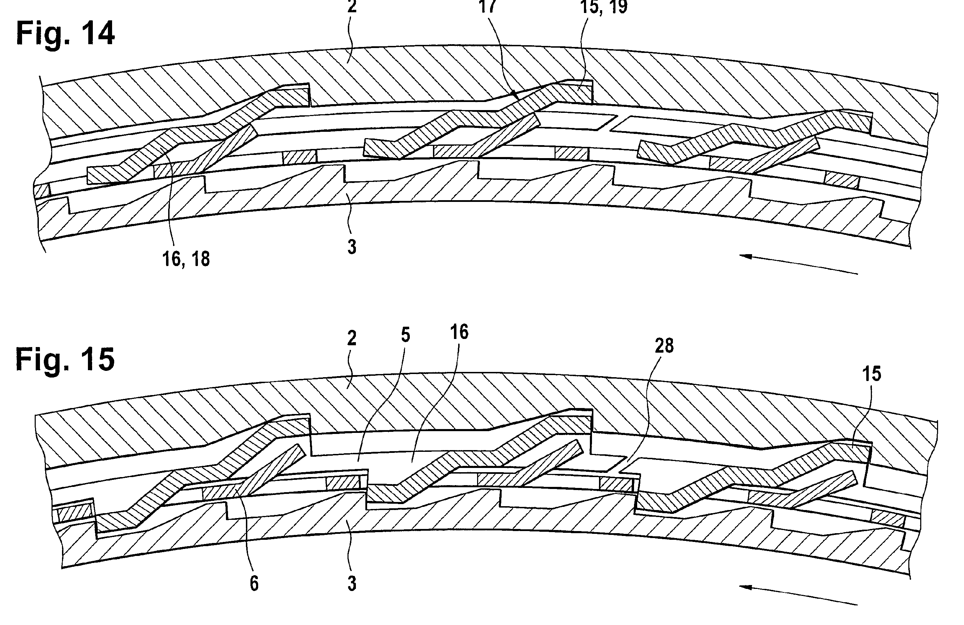

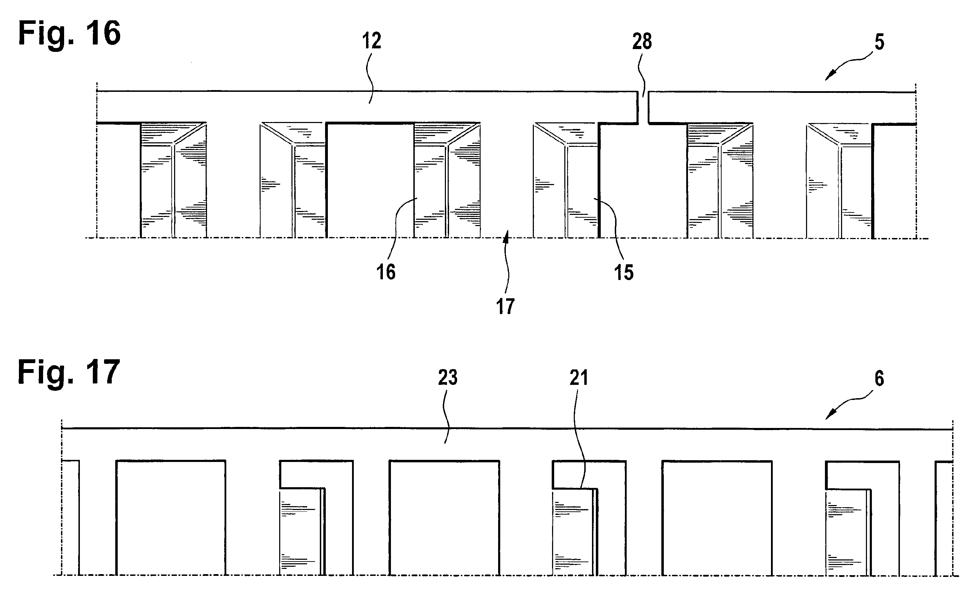

Bei der Ausführungsform nach den Figuren 15 bis 17 handelt es sich um eine radiale Klinkensperre, welche sich von der Ausführungsform nach den Figuren 9 bis 14 durch die Gestaltung der Doppelklemmzungen 17 unterscheidet: Die Klemmzungen 15, 16 sind als tiefgezogene Klemmtaschen ausgebildet, wobei die Doppelklemmzunge 17 längs ihrer gesamten tangentialen Erstreckung mit den Randleisten 12, 13 verbunden ist. Im Vergleich zum Ausführungsbeispiel nach den Figuren 9 bis 14 weisen die Doppelklemmzungen 17 im Ausführungsbeispiel nach den Figuren 15 bis 17 damit eine geringere elastische Nachgiebigkeit auf, wodurch ein höheres Drehmoment übertragbar ist.

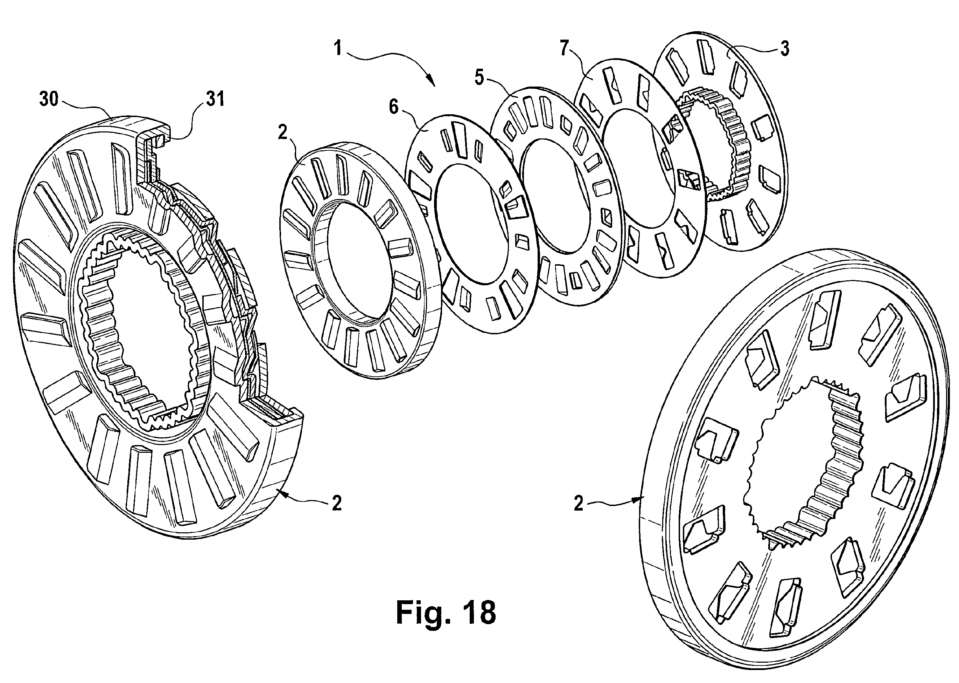

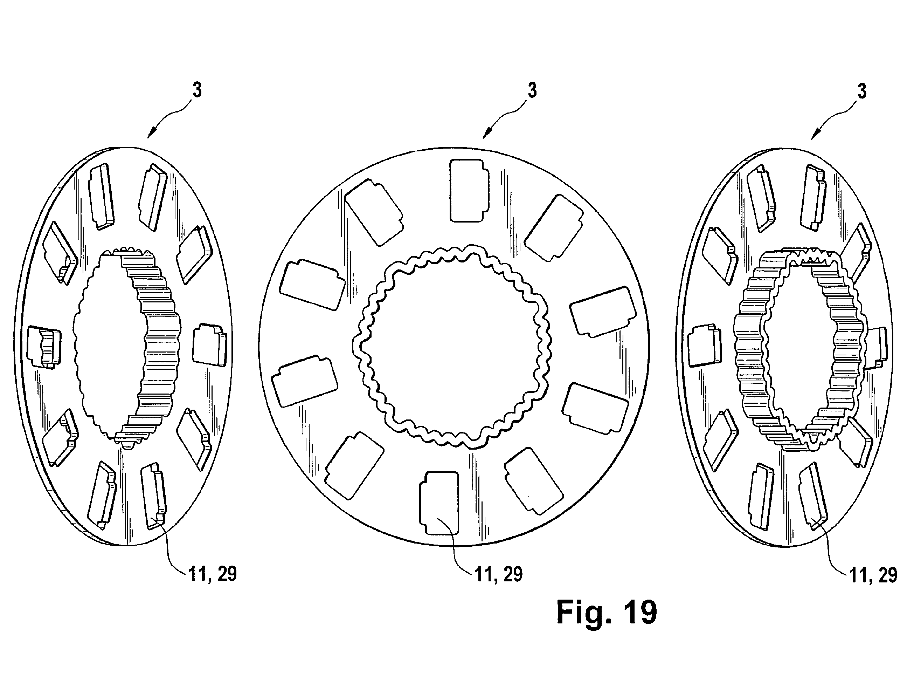

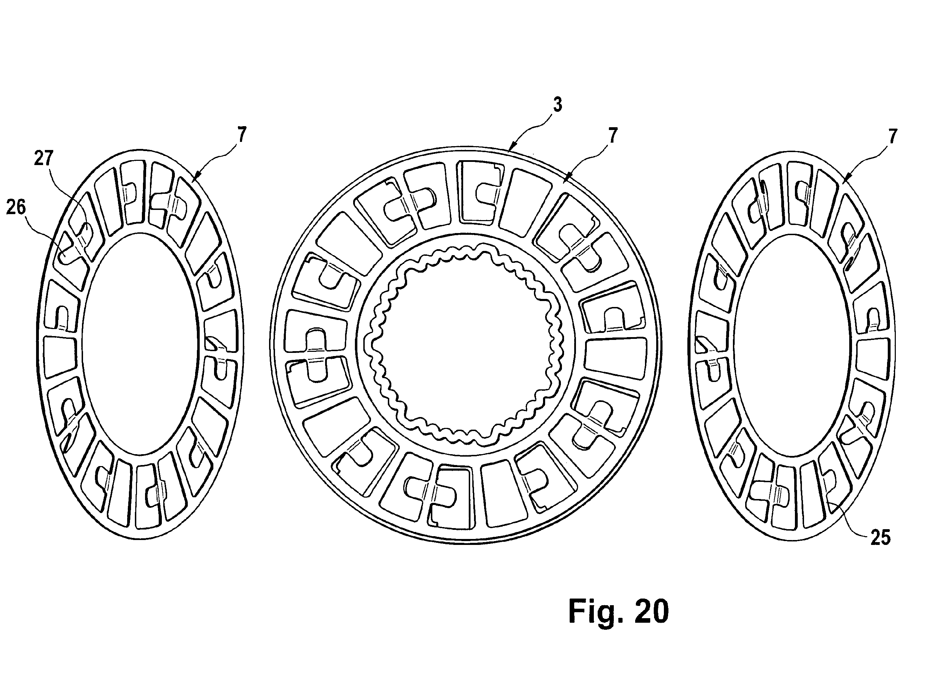

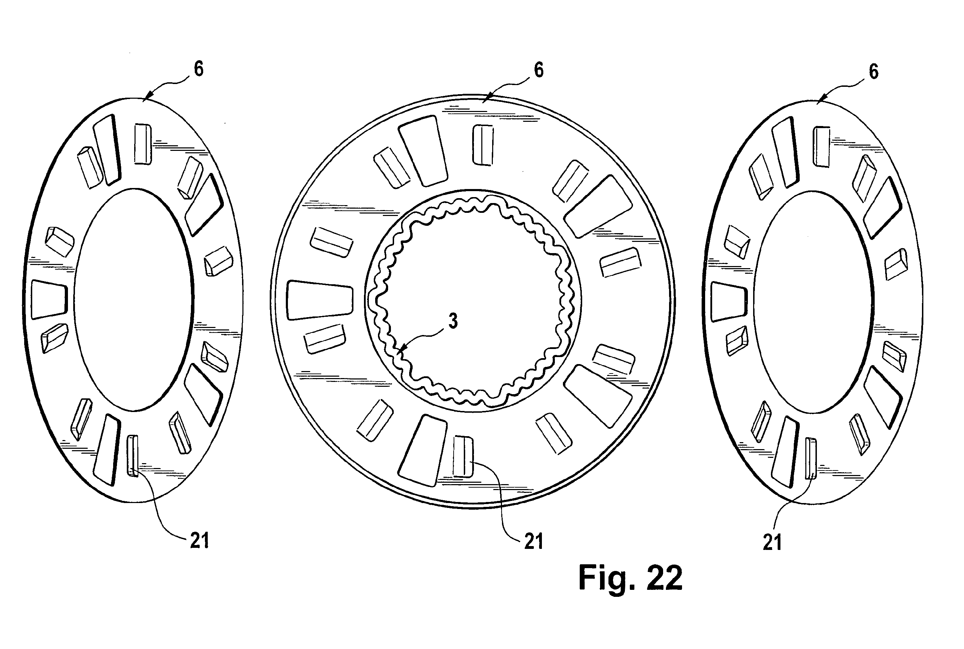

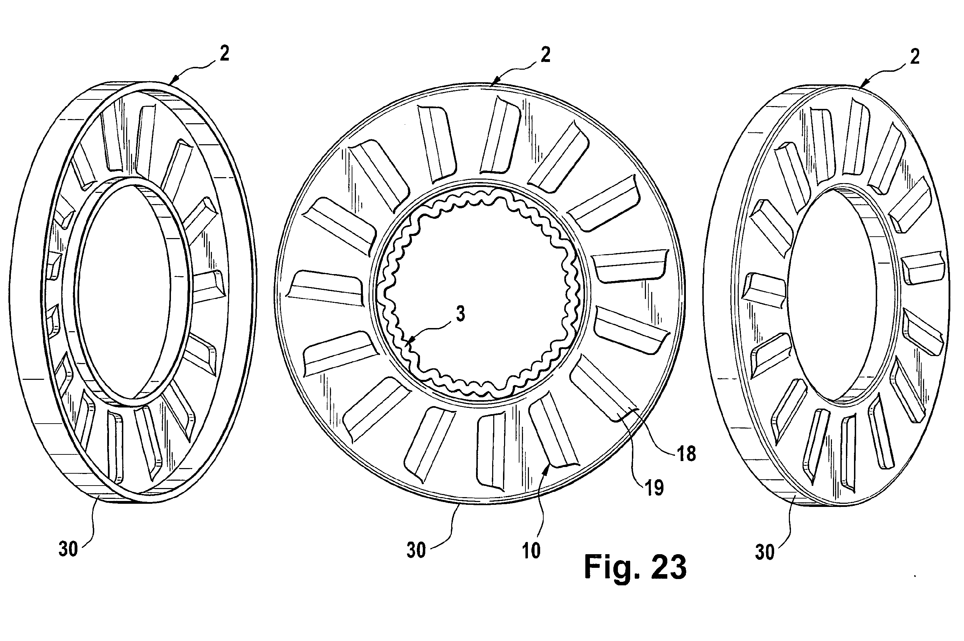

Das Ausführungsbeispiel nach den Figuren 18 bis 23 zeigt eine als axiale Klinkensperre ausgebildete Freilaufkupplung 1, deren prinzipielle Funktionsweise mit der Bauform nach Fig. 1 übereinstimmt. Im Unterschied zu dieser Bauform sind jedoch die Klemmzungen 15, 16 - ähnlich wie in der Ausführungsform nach den Figuren 15 bis 17 - als tiefgezogene Klemmtaschen ausgebildet.

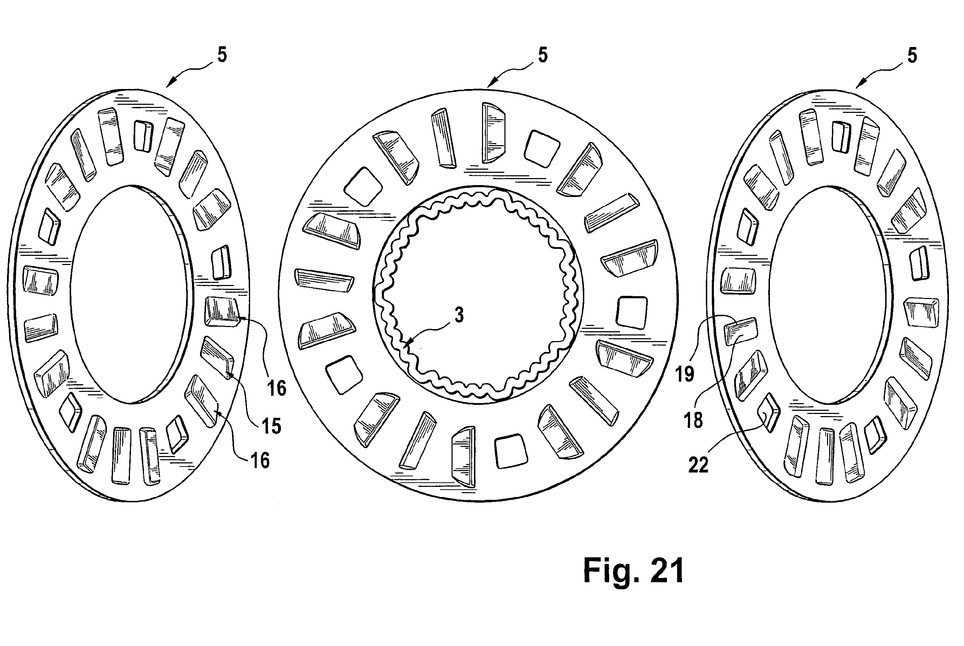

Wie aus den unterschiedlichen Ansichten in Fig. 21 hervorgeht, weist der Klemmring 5 der Freilaufkupplung 1 nach Fig. 18 lediglich fünf Fenster 22 auf, zwischen denen sich jeweils drei Klemmtaschen 15, 16 befinden. Hiervon ist eine mittlere Klemmtasche 15 dem Außenring 2 zugewandt, während zwei der inneren Klemmtasche 15 benachbarte äußere Klemmtaschen 16 dem Innenring 3 zugewandt sind. Die Steuerflächen 21 des mit dem Klemmring 5 zusammenwirkenden Schlepprings 6 sind, vergleichbar mit den durch die Klemmtaschen 15, 16 gebildeten Abschnitten 18, 19 des Klemmrings 5, als taschenförmige Vertiefungen ausgebildet.

Die Raststrukturen 10 am Außenring 2 sind - wie in den übrigen Ausführungsformen - durch Klemmrampen gebildet, wogegen am Innenring 3 die Raststrukturen 11 in Form von Aussparungen 29 realisiert sind. Die Anzahl der Klemmrampen 10 beträgt fünfzehn und damit das 1,5-fache der Anzahl der Aussparungen 29.

Wie aus Fig. 18 hervorgeht, weist der Außenring 2 eine zylindermantelförmige, den Klemmring 5, den Schleppring 6 sowie den Federring 7 umgebende Außenwandung 30 auf, an welche sich, radial nach innen gerichtet, ein Bord 31 anschließt, welcher den Innenring 3 derart umgreift, dass sämtliche Komponenten 2, 3, 5, 6, 7 der Freilaufkupplung 1 als Baueinheit verliersicher miteinander verbunden sind.

### Bezugszeichen

- 1: Freilaufkupplung
- 2: Außenring
- 3: Innenring
- 4: Spaltraum
- 5: Klemmring
- 6: Schleppring
- 7: Federring
- 8: Klemmbahn
- 9: Klemmbahn
- 10: Raststruktur
- 11: Raststruktur
- 12: Randleiste
- 13: Randleiste
- 14: Steg
- 15: Klemmzunge
- 16: Klemmzunge
- 17: Doppelklemmzunge
- 18: innerer Abschnitt
- 19: äußerer Abschnitt
- 20: Anschlagfläche
- 21: Steuerfläche
- 22: Fenster
- 23: Randleiste
- 24: Randleiste
- 25: Steg
- 26: Federzunge
- 27: Federzunge
- 28: Schlitz
- 29: Aussparung
- 30: Außenwandung
- 31: Bord

- A: Rotationsachse
- H: Abstand

## Patentansprüche

1. Formschlüssige Freilaufkupplung, mit
• einer ersten, Raststrukturen (10) aufweisenden Klemmbahn (8),
• einer zweiten, Raststrukturen (11) aufweisenden Klemmbahn (9),
• einem zwischen den Klemmbahnen (8, 9) gebildeten Spaltraum (4),
• einem im Spaltraum (4) angeordneten Klemmring (5), welcher eine Anzahl der ersten Klemmbahn (8) zugewandter Klemmzungen (15) und eine Anzahl der zweiten Klemmbahn (9) zugewandter Klemmzungen (16) aufweist, **dadurch gekennzeichnet, dass**
• einem im Spaltraum (4) angeordneten Schleppring (6) vorgesehen ist, welcher relativ zum Klemmring (5) begrenzt schwenkbar und gegen eine der Klemmbahnen (8, 9) angefedert ist sowie derart mit dem Klemmring (5) zusammenwirkt, dass bei Verdrehung der ersten Klemmbahn (8) relativ zur zweiten Klemmbahn (9) in Freilaufrichtung der Klemmring (5) vollständig von einer der Klemmbahnen (8) abhebt, während die dieser Klemmbahn (8) abgewandten Klemmzungen (16) in die Raststrukturen (11) der gegenüberliegenden Klemmbahn (9) eintauchen.

2. Freilaufkupplung nach Anspruch 1, **dadurch gekennzeichnet, dass** der Klemmring (5) sowie der Schleppring (6) axial zwischen den Klemmbahnen (8, 9) angeordnet sind.

3. Freilaufkupplung nach Anspruch 2, **gekennzeichnet durch** einen im Spaltraum (4) angeordneten Federring (7).

4. Freilaufkupplung nach Anspruch 3, **dadurch gekennzeichnet, dass** der Federring (7) zur Anfederung sowohl des Klemmrings (5) als auch des Schlepprings (6) vorgesehen ist.

5. Freilaufkupplung nach Anspruch 4, **dadurch gekennzeichnet, dass** der Federring (7) zwei ringförmige Randleisten (24) aufweist, welche durch in radialer Richtung verlaufende Stege (25) miteinander verbunden sind, wobei aus jedem Steg (25) Federzungen (26, 27) auskragen, welche einerseits zur Anfederung des Klemmrings (5) und andererseits zur Anfederung des Schlepprings (6) vorgesehen sind.

6. Freilaufkupplung nach Anspruch 5, **dadurch gekennzeichnet, dass** die den Schleppring (6) kontaktierende Federzunge (26) kürzer als die den Klemmring (5) kontaktierende Federzunge (27) ist.

7. Freilaufkupplung nach einem der Ansprüche 2 bis 6, **dadurch gekennzeichnet, dass** die Klemmbahnen (8, 9) unveränderlich axial voneinander beabstandet sind.

8. Feilaufkupplung nach Anspruch 1, **dadurch gekennzeichnet, dass** der Klemmring (5) und der Schleppring (6) radial zwischen den Klemmbahnen (8, 9) angeordnet sind.

9. Freilaufkupplung nach Anspruch 8, **dadurch gekennzeichnet, dass** der Klemmring (5) als Federelement ausgebildet ist.

10. Freilaufkupplung nach Anspruch 8 oder 9, **dadurch gekennzeichnet, dass** der Klemmring (5) als gebogenes Band, zwischen dessen Enden ein Schlitz (28) gebildet ist, gefertigt ist.

11. Freilaufkupplung nach einem der Ansprüche 8 bis 10, **dadurch gekennzeichnet, dass** der Schleppring (6) unter Vorspannung auf einem Innenring (3) angeordnet ist.

12. Freilaufkupplung nach einem der Ansprüche 1 bis 11, **dadurch gekennzeichnet, dass** jeweils eine der ersten Klemmbahn (8) zugewandte gewandten Klemmzunge (16) eine Doppelklemmzunge (17) bildet, welche zwischen zwei Randleisten (12, 13) des Klemmrings (5) gehalten ist.

13. Freilaufkupplung nach Anspruch 12, **dadurch gekennzeichnet, dass** die Doppelklemmzunge (17) mittels eines Steges (14) tordierbar zwischen den Randleisten (12, 13) angeordnet ist.

14. Freilaufkupplung nach einem der Ansprüche 1 bis 11, **dadurch gekennzeichnet, dass** die Klemmzungen (15, 16) als Klemmtaschen ausgebildet sind.

15. Freilaufkupplung nach Anspruch 14, **dadurch gekennzeichnet, dass** die Anzahl der der ersten Klemmbahn (8) zugewandten Klemmtaschen (15) von der Anzahl der der zweiten Klemmbahn (9) zugewandten Klemmtaschen (16) abweicht.

16. Freilaufkupplung nach einem der Ansprüche 1 bis 15, **dadurch gekennzeichnet, dass** jede Klemmzunge (15, 16) einen gegenüber einem inneren Abschnitt (18) abgeknickten äußeren Abschnitt (19) aufweist, wobei der äußere Abschnitt (19) relativ zu den Randleisten (12, 13) geringer schräg gestellt ist als der innere Abschnitt (18).

17. Freilaufkupplung nach einem der Ansprüche 1 bis 16, **dadurch gekennzeichnet, dass** der Schleppring Randleisten (23) sowie relativ zu diesen schräg gestellte Steuerflächen (21) aufweist, die zur Zusammenwirkung mit dem Klemmring (5) vorgesehen sind.

18. Freilaufkupplung nach einem der Ansprüche 1 bis 17, **dadurch gekennzeichnet, dass** zumindest eines der Teile Klemmring (5) und Schleppring (6) als spanlos umgeformtes Blechteil ausgebildet ist.

## Claims

1. Positive freewheel coupling, with
• a first clamping track (8) having latching structures (10),
• a second clamping track (9) having latching structures (11),
• a gap space (4) formed between the clamping tracks (8, 9),
• a clamping ring (5) which is arranged in the gap space (4) and which has a number of clamping tongues (15) facing the first clamping track (8) and a number of clamping tongues (16) facing the second clamping track (9), **characterized in that**
• a drag ring (6) is provided which is arranged in the gap space (4) and which is pivotable to a limited extent in relation to the clamping ring (5) and is sprung toward one of the clamping tracks (8, 9) and which cooperates with the clamping ring (5) in such a way that, during the rotation of the first clamping track (8) in relation to the second clamping track (9) in the freewheel direction, the clamping ring (5) lifts off completely from one of the clamping tracks (8), while the clamping tongues (16) facing away from this clamping track (8) penetrate into the latching structures (11) of the opposite clamping track (9).

2. Freewheel coupling according to Claim 1, **characterized in that** the clamping ring (5) and the drag ring (6) are arranged axially between the clamping tracks (8, 9).

3. Freewheel coupling according to Claim 2, **characterized by** a spring ring (7) arranged in the gap space (4).

4. Freewheel coupling according to Claim 3, **characterized in that** the spring ring (7) is intended for springing both the clamping ring (5) and the drag ring (6).

5. Freewheel coupling according to Claim 4, **characterized in that** the spring ring (7) has two annular marginal strips (24) which are connected to one another by means of webs (25) running in the radial direction, spring tongues (26, 27) projecting out of each web (25) and being intended, on the one hand, for springing the clamping ring (5) and, on the other hand, for springing the drag ring (6).

6. Freewheel coupling according to Claim 5, **characterized in that** the spring tongue (26) contacting the drag ring (6) is shorter than the spring tongue (27) contacting the clamping ring (5).

7. Freewheel coupling according to one of Claims 2 to 6, **characterized in that** the clamping tracks (8, 9) are spaced apart from one another axially in an invariable manner.

8. Freewheel coupling according to Claim 1, **characterized in that** the clamping ring (5) and the drag ring (6) are arranged radially between the clamping tracks (8, 9).

9. Freewheel coupling according to Claim 8, **characterized in that** the clamping ring (5) is designed as a spring element.

10. Freewheel coupling according to Claim 8 or 9, **characterized in that** the clamping ring (5) is manufactured as a bent band, between the ends of which a slot (28) is formed.

11. Freewheel coupling according to one of Claims 8 to 10, **characterized in that** the drag ring (6) is arranged under pretension on an inner ring (3).

12. Freewheel coupling according to one of Claims 1 to 11, **characterized in that** in each case one clamping tongue (15) facing the first clamping track (8) forms together with a clamping tongue (16) facing the second clamping track (9) a double clamping tongue (17) which is held between two marginal strips (12, 13) of the clamping ring (5).

13. Freewheel coupling according to Claim 12, **characterized in that** the double clamping tongue (17) is arranged between the marginal strips (12, 13) so as to be capable of experiencing torsion by means of a web (14).

14. Freewheel coupling according to one of Claims 1 to 11, **characterized in that** the clamping tongues (15, 16) are designed as clamping pockets.

15. Freewheel coupling according to Claim 14, **characterized in that** the number of clamping pockets (15) facing the first clamping track (8) deviates from the number of clamping pockets (16) facing the second clamping track (9).

16. Freewheel coupling according to one of Claims 1 to 15, **characterized in that** each clamping tongue (15, 16) has an outer portion (19) bent with respect to an inner portion (18), the outer portion (19) being inclined in relation to the marginal strips (12, 13) to a lesser extent than the inner portion (18).

17. Freewheel coupling according to one of Claims 1 to 16, **characterized in that** the drag ring has marginal strips (23) and control faces (21) which are inclined in relation to these and which are intended to cooperate with the clamping ring (5).

18. Freewheel coupling according to one of Claims 1 to 17, **characterized in that** at least one of the parts, namely clamping ring (5) and drag ring (6), is designed as a sheet metal part formed in a non-cutting manner.

## Revendications

1. Accouplement de roue libre à engagement par correspondance géométrique, comprenant
- une première piste de serrage (8) présentant des structures d'encliquetage (10),
- une deuxième piste de serrage (9) présentant des structures d'encliquetage (11),
- un interstice (4) formé entre les pistes de serrage (8, 9),
- une bague de serrage (5) disposée dans l'interstice (4), laquelle présente une pluralité de langues de serrage (15) tournées vers la première piste de serrage (8) et une pluralité de langues de serrage (16) tournées vers la deuxième piste de serrage (9), **caractérisé en ce**
- **qu'**une bague d'entraînement (6) disposée dans l'interstice (4) est prévue, laquelle peut pivoter de manière limitée par rapport à la bague de serrage (5) et est supportée à ressort contre l'une des pistes de serrage (8, 9), et coopère avec la bague de serrage (5) de telle sorte que lors de la rotation de la première piste de serrage (8) par rapport à la deuxième piste de serrage (9) dans le sens de la roue libre, la bague de serrage (5) se soulève complètement de l'une des pistes de serrage (8), tandis que les langues de serrage (16) opposées à cette piste de serrage (8) pénètrent dans les structures d'encliquetage (11) de la piste de serrage opposée (9).

2. Accouplement de roue libre selon la revendication 1, **caractérisé en ce que** la bague de serrage (5) ainsi que la bague d'entraînement (6) sont disposées axialement entre les pistes de serrage (8, 9).

3. Accouplement de roue libre selon la revendication 2, **caractérisé par** une bague à ressort (7) disposée dans l'interstice (4).

4. Accouplement de roue libre selon la revendication 3, **caractérisé en ce que** la bague à ressort (7) est prévue pour supporter à ressort à la fois la bague de serrage (5) et la bague d'entraînement (6).

5. Accouplement de roue libre selon la revendication 4, **caractérisé en ce que** la bague à ressort (7) présente deux baguettes de bord (24) de forme annulaire qui sont connectées l'une à l'autre par des âmes (25) s'étendant dans la direction radiale, des langues à ressort (26, 27) faisant saillie depuis chaque âme (25), lesquelles sont prévues d'une part pour supporter à ressort la bague de serrage (5) et d'autre part pour supporter à ressort la bague d'entraînement (6).

6. Accouplement de roue libre selon la revendication 5, **caractérisé en ce que** la langue à ressort (26) en contact avec la bague d'entraînement (6) est plus courte que la langue à ressort (27) en contact avec la bague de serrage (5).

7. Accouplement de roue libre selon l'une quelconque des revendications 2 à 6, **caractérisé en ce que** les pistes de serrage (8, 9) sont espacée l'une de l'autre axialement de manière inchangeable.

8. Accouplement de roue libre selon la revendication 1, **caractérisé en ce que** la bague de serrage (5) et la bague d'entraînement (6) sont disposées radialement entre les pistes de serrage (8, 9).

9. Accouplement de roue libre selon la revendication 8, **caractérisé en ce que** la bague de serrage (5) est réalisée sous forme d'élément de ressort.

10. Accouplement de roue libre selon la revendication 8 ou 9, **caractérisé en ce que** la bague de serrage (5) est fabriquée sous forme de bande cintrée, entre les extrémités de laquelle est formée une fente (28).

11. Accouplement de roue libre selon l'une quelconque des revendications 8 à 10, **caractérisé en ce que** la bague d'entraînement (6) est disposée avec précontrainte sur une bague interne (3).

12. Accouplement de roue libre selon l'une quelconque des revendications 1 à 11, **caractérisé en ce que** qu'à chaque fois une langue de serrage (15) tournée vers la première piste de serrage (8) forme avec une langue de serrage (16) tournée vers la deuxième piste de serrage (9) une langue de serrage double (17) qui est maintenue entres deux baguettes de bord (12, 13) de la bague de serrage (5).

13. Accouplement de roue libre selon la revendication 12, **caractérisé en ce que** la langue de serrage double (17) est disposée au moyen d'une âme (14) entre les baguettes de bord (12, 13) de manière à pouvoir être tordue.

14. Accouplement de roue libre selon l'une quelconque des revendications 1 à 11, **caractérisé en ce que** les langues de serrage (15, 16) sont réalisées sous forme de poches de serrage.

15. Accouplement de roue libre selon la revendication 14, **caractérisé en ce que** le nombre des poches de serrage (15) tournées vers la première piste de serrage (8) est différent du nombre de poches de serrage (16) tournées vers la deuxième piste de serrage (9).

16. Accouplement de roue libre selon l'une quelconque des revendications 1 à 15, **caractérisé en ce que** chaque langue de serrage (15, 16) présente une portion extérieure (19) coudée par rapport à une portion intérieure (18), la portion extérieure (19) étant orientée par rapport aux baguettes de bord (12, 13) moins en biais que la portion intérieure (18).

17. Accouplement de roue libre selon l'une quelconque des revendications 1 à 16, **caractérisé en ce que** la bague d'entraînement présente des baguettes de bord (23) ainsi que des surfaces de commande (21) orientées en biais par rapport à celles-ci, lesquelles sont prévues pour coopérer avec la bague de serrage (5).

18. Accouplement de roue libre selon l'une quelconque des revendications 1 à 17, **caractérisé en ce qu'**au moins l'une des pièces bague de serrage (5) et bague d'entraînement (6) est réalisée sous forme de pièce en tôle façonnée sans enlèvement de matière.
